**Europäisches Patentamt**

**European Patent Office**

**Office européen des brevets**

(11) Numéro de publication: **0 096 645**
**B1**

(12) **FASCICULE DE BREVET EUROPÉEN**

(45) Date de publication du fascicule du brevet:
**15.10.86**

(21) Numéro de dépôt: **83420095.8**

(22) Date de dépôt: **07.06.83**

(51) Int. Cl.⁴: **F 16 K 5/06,** F 16 K 5/20

(54) Dispositif d'étanchéité pour robinet à tournant sphérique.

(30) Priorité: **07.06.82 FR 8210085**

(43) Date de publication de la demande:
**21.12.83 Bulletin 83/51**

(45) Mention de la délivrance du brevet:
**15.10.86 Bulletin 86/42**

(84) Etats contractants désignés:
**BE CH DE GB IT LI**

(56) Documents cité:
**FR-A-2 196 699**
**GB-A-716 610**
**US-A-2 916 254**
**US-A-3 722 859**
**US-A-4 286 614**

(73) Titulaire: **SOCIETE NOUVELLE AUXIM, 13- 15, rue Edouard Martel Z.I. La Chauvetière, F-42030 Saint Etienne Cédex (FR)**

(72) Inventeur: **Seguenot, Gabriel, 56, Boulevard Victor Hugo, F-92200 Neuilly (FR)**

(74) Mandataire: **Perrier, Jean- Pierre, Cabinet GERMAIN & MAUREAU 12 rue de la République, F-42000 St- Etienne (FR)**

## Description

L'invention est relative à un dispositif d'étanchéité pour robinet à tournant sphérique et à brides de raccordement.

Un tel dispositif, destiné à assurer l'étanchéité entre le corps etle tournant, est associe à chacun des canaux ménagés dans le corps pour le passage du fluide et comporte des moyens venant en contact d'étanchéité avec le tournant.

L'invention vise plus spécialement les dispositifrs dans lesquels un joint annulaire est pressé contre le tournant par la pression hydrostatique du fluide.

Dans les formes de réalisation actuelles, le joint fait partie d'un ensemble rigide déplaçable par la pression et présentant la forme générale d'un piston annulaire disposé autour du canal correspondant. Cette construction volumineuse est difficilement utilisable sur les robinets de petite section. De plus, les déplacements de cet ensemble rigide sont affectés par des problemes de frottement, de sorte que l'effort, avec lequel le joint d'étanchéité est plaqué contre le tournant, n'est pas réellement proportionnel à la pression hydrostatique et que des fuites peuvent se produire. Un dispositif de ce type, qui correspond au préambule de la revendication 1, est decrit dans le brevet US-A-2 916 254.

La présente invention a pour but de fournir un dispositif d'étanchéité, de construction simple, qui soit adaptable aussi aux robinets a tournant sphérique de petite dimension et qui assure une étanchéité parfaite, quelle que soit la pression. Ce but est obtenu par l'invention, telle qu' elle est caractérisée dans la revendication 1.

Dans ce dispositif, les moyens déformables réagissant à la pression hydrostatique sont réalisés en elastomère et sont en contact et plaqués contre le joint annulaire, réalisé en plastomère et avec lequel il forme un ensemble d'étanchéité continu, tandis que le logement annulaire est délimité entre deux bagues respectiment intérieure et extérieure dont les extrémités libres biseautées viennent à proximité du tournant, mais sans contact avec lui.

Lorsqu'au moins l'un des canaux du robinet est soumis à la pression hydrostatique du fluide, les moyens réagissant à la pression se déforment sous l'influence de cette pression et communiquent au joint annulaire un effort qui, proportionnel à cette pression, tend à le plaquer davantage contre le tournant. Le joint annulaire et les moyens réagissant à la pression forment un ensemble d'étanchéité continu et déformable, de faible encombrement.

Les deux bagues, intérieure et extérieure, facilitent la construction du corps de robinet et, lorsqu'au moins l'une d'elles est réalisée en metal, assurent une étanchéité résiduelle en cas de destruction des joints par un incendie.

Dans une forme de réalisation, la bague extérieure comporte à proximité du fond du logement annulaire, une face pentue formant chanfrein d'appui pour les moyens déformables et est montée dans le corps avec possibilité de déplacement longitudinal.

Lorsque les moyens déformables sont déformés par la pression, ils s'appuient sur le chanfrein precité et communiquement à la bague extérieure, un effort tendant à la maintenir éloignée du tournant. Cet agencement évite que, sous l'effet de la pression, la bague extérieure viennent également en contact avec le tournant, ce qui augmenterait le serrage de celui-ci et, en conséquence, le couple nécessaire pour le manoeuvrer.

D'autres modes particuliers de réalisation de l'invention apparaissent dans les revendications indépendantes.

D'autres caracteristiques et avantages ressortiront de la description qui suit en référence au dessin schématique annexé représentant, àtitre d'exemple non limitatif, une forme d'execution de ce dispositif dans le cas de son application à un tournant arbré.

Figure 1 est une vue en coupe longitudinale de l'ensemble du robinet,

Figures 2 et 3 sont des vues partielles montrant, à échelle agrandie, le dispositif d'étanchéité respectivement au repos et lorsqu'il est soumis à la pression hydrostatique,

Figure 4 est une vue en coupe montrant une variante de réalisation de la section transversale de la bague déformable,

Figure 5 est une vue partielle, en coupe, d'une autre forme d'exécution du dispositif,

Figure 6 est une variante de réalisation du dispositif de figure 5.

De façon connue, ce robinet est composé d'un corpe (2) associé a un chapeau (3) et d'un tournant (4). Ce tournant est solidaire de deux boute d'arbre, respectivement, (5) monté libre en rotation dans le corps, et (6) monté libre en rotation dans le chapeau. Le bout d'arbre (6) traverse le chapeau et comporte, à son extrémité, un carre d'entraînement (7) appelé à coopérer avec un organe de manoeuvre. Sur le corpe (2), sont rapportées des brides de raccordement (8) comportant chacune un canal interne (9) pour le passage au fluide. Le tournant (4) comporte également au moine un canal intérieur (10) apte à venir dans le prolongenent des canaux (9) des deux brides précitéée. L' étanchéité entre le corpe et le tournant est assurée par un dispositif désigné de façon générale par (12).

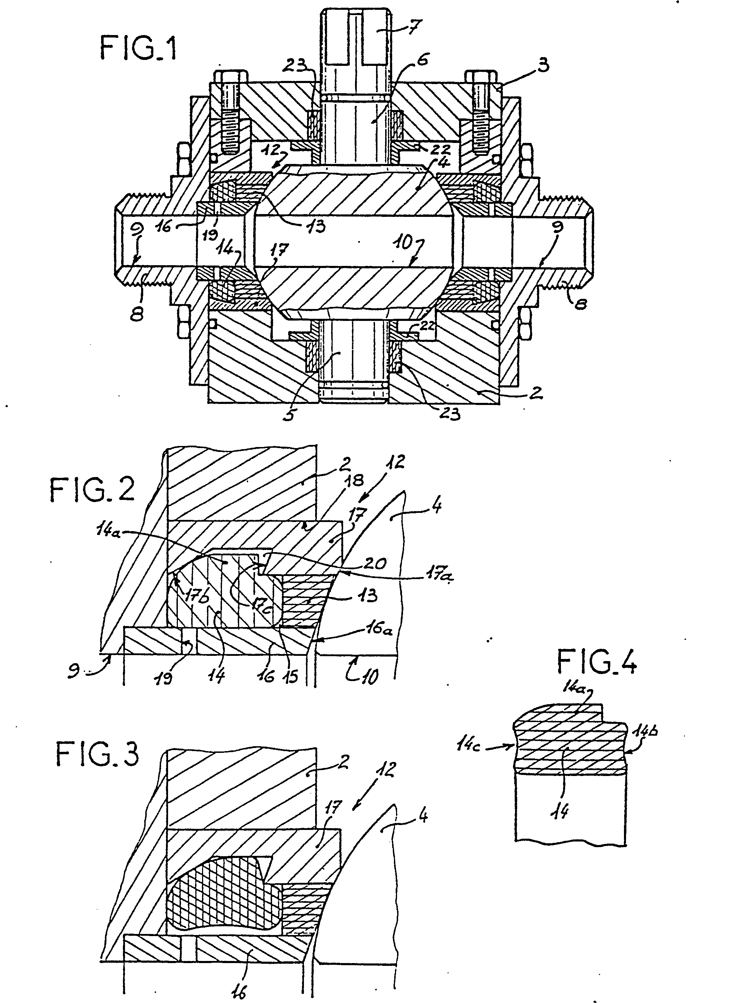

Selon l'invention, et comme montré plus en détail à la figure 2, ce dispositif d' étanchéité est composé d'un joint annulaire (13) disposé avec une bague (14) en matériau déformable élatiquement dans un logement annulaire ménagé autour du canal correspondant pour le passage du fluide. Le joint annulaire d'étanchéité (13) est réalisé en matière synthétique de type plastomére, tandis que la bague déformable (14) est réalisée dans une matière synthétique de type élastomère.

Dans la forme d'exécution représentée, le logement annulaire contenant le joint (13) et la bague (14) est lui-même délimité par une bague intérieure (16) et par une bague extérieure (17). La bague intérieure (16) est réalisée en métal et, dans cette forme d'exécution, est emmanchée dans la bride (8) de raccordement. La bague extérieure (17), qui est réalisée en matière synthétique de type plastomère, est logée dans un alésage (18) du corps, c'est-à-dire peut coulisser par rapport à ce corps.

La bague intérieure (16) assure le guidage du joint annulaire (13) et s'oppose à son éventuelle extrusion par la pression. A cette fin, le jeu existant entre son extrémité libre (16a) et le tournant (4) est très réduit. Cette bague (16) comporte également un ou plusieurs canaux (19) mettant en communication le canal (9) de passage du fluide avec le logement annulaire (15). Ce canal est disposé de manière à communiquer avec la partie du logement annulaire (15) contenant la bague déformable (14) qui, par ailleuse, a une section transversale supérieure à la section transversale du joint annulaire (13). La bague extérieure (17) assure les mêmes fonctions que celle intérieure (16). Elle comporte également, à son extrémité libre, un chanfrein (17a) délimitant une portée conique apte à venir en contact glissant avec le tournant (4).

Dans ce dispositif, l'étanchéité est assurée par la différence des pressions régnant entre l'orifice d'arrivée du fluide et le volume fonctionnel intérieur du robinet qui ne sort pas au passage du fluide, c'est-à-dire par différence de pression de part et d'autre de l'ensemble d' étanchéité continu et déformable compose du joint annulaire (13) et de la bague deformable (14). Ainsi, lorsque l'un des canaux (9) de passage du fluide est soumis à la pression hydrostatique du fluide, celle-ci est dirigée par les canaux (19) directement contre la bague déformable (14). Sous l'effet de cette pression, la bague se déforme, comme montré figure 3. Cette déformation augmente son appui contre le fond du logement annulaire (15), mais aussi et, surtout, contre le joint annulaire (13) qui est ainsi plaqué contre le tournant (14) avec un effort qui est proportionnel à la pression hydrostatique du fluide arrivant au robinet.

Lorsqu'au contraire, l'orifice de raccordement est à l'échappement, la pression régnant dans le volume fonctionnel du robinet parvient, par le jeu existant entre la bague extérieure (17) et l'alésage (18) du corps,au logement annulaire (15) et s'exerce ainsi sur la bague déformable (14). Cette dernière vient en compression radiale contre la bague intérieure (18) et, de la même façon que précédemment, exerce sur le joint annulaire (13) un effort tendant à plaquer ce dernier contre le tournant sphérique pour assurer l'étanchéité. Il est à noter que, si besoin est, et notamment pour les robinets travaillant à basse pression, le jeu existant entre la bague extérieure (17) et le corps (18) peut être augmenté. Pour les mêmes raisons, des canaux ou rainures peuvent être ménagés dans la bague (17) pour faciliter l'accès de la pression au logement annulaire (15).

Avantageusement, pour éviter que la bague extérieure (17) tende à se déplacer en direction du tournant (4), lorsque la bague déformable (14) est déformée par la pression et, en d'autres termes, pour éviter que la bague extérieure (17), en venant en appui contre le tournant, augmente le couple résistant s'opposant à la rotation de ce tournant, cette bague (17) comporte,dans sa partie postérieure et à proximité du fond du logement annulaire, une face pentue (17b) d'appui pour la bague déformable (14). De la sorte, lorsque la bague se déforme, et en même temps qu'elle tend à pousser le joint annulaire (13) contre le tournant, elle communique à la bague (17) un effort de sens inverse tendant à éloigner cette bague du tournant (4).

Dans la forme d'exécution représentée aux figures 2 et 3, la bague déformable (14) comporte un bourrelet périphérique (14a) se logeant dans une gorge (20) de la bague (17). Cette gorge comporte deux faces latérales inclinées en direction du fond du logement annulaire (15), à savoir la face pentue (17b) précitée, et une face (17c) qui, dans cette forme d'exécution, est moins inclinée que la précédente. La largeur de cette gorge est déterminée de manière que le bourrelet (14a) ne puisse, en aucun cas, venir en contact avec la face (17c), afin que, sous l'effet de la déformation de cette bague (14), la bague extérieure (17) soit exclusivement soumise à un effort tendant à l'éloigner du tournant (4).

Dans la variante de réalisation représentée à la figure 4, la bague déformable (14) comporte des faces antérieures (14b) et postérieure (14c) qui sont concaves afin de faciliter sa déformation sous l'effet de la pression hydrostatique.

Il est à noter que l'étanchéité sur les bouts d'arbre (5) et (6) du tournant est obtenue par déformation d'un joint à lèvre (23) prenant appui contre une bague de centrage (22), ce qui réduit les frottements du tournant et facilite donc sa manoeuvre.

Ce dispositif d'étanchéité satisfait aussi aux règles de sécurité au feu, puisqu'en cas d'incendie et de destruction du joint (13), de la bague déformable (14) et de la bague extérieure (17), la bague intérieure métallique (18), de même que la bague extérieure (17), venant très près du tournant (4) et sans contact avec lui, assure une étanchéité résiduelle dans les conditions pratiques de l'étanchéité "fire-safe" des applications du pétrole.

Il est évident que l'invention ne se limite pas à la seule forme d'exécution qui a été décrite ci-dessus; elle en embrasse les variantes de réalisation comportant des moyens équivalents, quelles que soient notamment la forme de la section de la bague (14) et la structure interne des différents composants; c'est ainsi que la bague extérieure (17) réalisée en plastomère peut être renforcée par une armature métallique, ou même exécutée entièrement en matériau métallique.

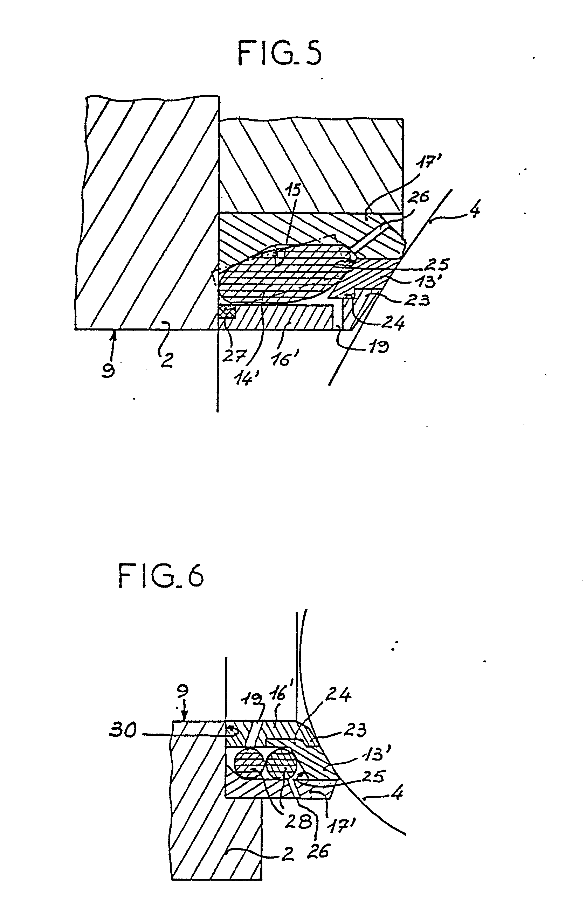

La forme d'exécution de la figure 5 se différencie des précédentes par le fait que la bague intérieure (18,) est montée libre en translation dans le corps (2) au même titre que la bague extérieure (17'). De plus, cette bague intérieure (18') est liée en translation au joint annulaire (13'). Cette liaison est assurée par une collerette (23) de la bague (16') apte à coopérer avec une collerette (24) du joint (13'). En outre, la bague déformable (14') présente, au repos, la forme d'un anneau à section transversale rectangulaire. Cette bague est mise en place dans le logement (15) formé entre les bagues (18') et (17') et délimité transversalement par une paroi diamétrale du corps (2) et par une face inclinée (25) du joint (13'). Grâce à cette disposition, la bague déformable (14') prend appui, par deux de ses angles arrondis opposés, respectivement sur la face diamétrale du corps (2) et sur la face (25) du joint annulaire (13,).

La bague (14') est réalisée dans une matière synthétique de type élastomère, tandis que le joint annulaire (13') est réalisé dans une matière synthétique de type plastomère et que les deux bagues de guidage (16') et (17') sont réalisées dans des matériaux rigides et indéformables, de type métallique ou synthétique.

Comme dans la forme d'exécution précédente, la bague intérieure (16') comporte un canal (19) faisant communiquer le logement (15) avec le canal de passage du fluide. Dans le même but, la bague extérieure (17') est munie d'un canal (26) permettant la communication du logement (15) avec la partie intérieure du robinet.

La bague intérieure (16') comporte une gorge pour un joint de section carrée (27) maintenu en place par la bague déformable (14') et constituant bague anti-extrusion.

Grâce à cette construction, le dispositif d'étanchéité forme un ensemble pratiquement monobloc pouvant être facilement manipulé et mis en place dans le corps du robinet.

Dans la variante de réalisation de figure 6, la bague déformable est constituée par au moins deux joints toriques (28) qui, même en l'absence de pression, sont en contact d'étanchéité l'un avec l'autre et avec les faces du logement annulaire (15).

Exceptées ces différences, le dispositif est similaire à celui de figure 5 et procure d'excellents résultats.

Il est à noter que dans tous ces dispositifs, les déformations des moyens d'étanchéité s'effectuent uniquement en milieu déformable, de type élastomère ou plastomère, et ne sont pas sensibles aux phénomènes de plaquage hydraulique affectant des surfaces métalliques, comme c'est le cas dans les dispositifs habituels.

**Revendications**

1. Dispositif pour assurer l'étanchéité entre le corps (2) et le tournant (4) d'un robinet à tournant sphérique (4) et à brides de raccordement (8), le dispositif (12) étant disposé dans le corps (2) autour de chacun des canaux de passage (9) du fluide et comprenant:
- un joint annulaire (13) qui forme le siège du robinet apte à être appliqué contre le tournant (4);
- des moyens déformables (14-14'-28) qui réagissent à la pression hydrostatique du fluide, qui forcent le joint (13) contre le tournant (4) et qui comprennent au moins une bague en matériau déformable élastiquement;
- un logement annulaire borgne (15), qui communique avec le canal de passage (19), correspondant pour recevoir lesdits moyens déformables (14);
caractérisé en ce que
- le logement annulaire (15) est délimité par deux bagues coaxiales (16-17), respectivement intérieure (16-16') et extérieure (17-17'), par le joint annulaire (13) qui est disposé entre les deux bagues coaxiales, et par une bride de raccordement (8);
- la bague intérieure (16-16') présente au moins un canal de communication (19) de fluide entre le canal de passage (9) correspondant et le logement annulaire (15);
- les extrémités des bagues coaxiales (16-17) sont biseautées du côté du tournant (4) de sorte qu'il y a un jeu entre le tournant et la bague intérieure (16-16') et un contact glissant entre le tournant et la bague extérieure (17-17');
- les moyens déformables (14-14'-28) sont réalisés en matière élastomère, tandis que le joint annulaire (13-13') est réalisé en matière plastomère.

2. Dispositif selon la revendication 1 caractérisé en ce que la ba extérieure (17-17') comporte à proximité du fond du logement annulaire borgne (15), une face pentue (17b) formant chanfrein d'appui pour les moyens déformables (14-28) et est montée dans le corps (2) avec possibilité de déplacement longitudinal.

3. Dispositif selon l'ensemble des revendications 1 et 2 caractérisé en ce que la bague intérieure (16') est montée avec possibilité de déplacement longitudinal dans le corps (2) et comporte des moyens (23) de liaison en translation avec le joint annulaire (13'), tandis que ce joint annulaire (13') est muni sur sa partie postérieure d'une face inclinée (25) de contact avec les moyens déformables (14-28).

4. Dispositif selon l'ensemble des revendications 1 à 3 caractérisé en ce que les moyens déformables sont constitués par au moins deux joints toriques (28) en contact d'étanchéité, même en l'absence de pression, entre eux, avec la face pentue (25) du joint annulaire (13') et avec les faces du logement annulaire (15).

5. Dispositif selon la revendication 1 et l'une quelconque des revendications 2 à 4 caractérisé en ce que la bague extérieure (17-17') est réalisée en matière plastomère tandis que la bague extérieure (16-16') est métallique.

6. Dispositif selon l'ensemble des revendications 1 et 2 caractérisé en ce que les moyens déformables (14) sont munis d'un bourrelet périphérique (14a) se logeant dans une gorge (20) qui, ménagée dans la bague extérieure (17) comporte deux faces latérales inclinées en direction du fond du logement annulaire (15), la face latérale (17b) la plus proche dudit fond constituant, seule, face d'appui pour les moyens déformables (14).

## Patentansprüche

1. Zwischen dem Körper (2) und dem Schieber (4) eines mit einem sphärischem Schieber (4) und Anschlußflanschen (8) versehenen Leitungshahns wirkende Dichtungsvorrichtung (12), die in dem Körper (2) um die einzelnen Flüssigkeitsdurchgangskanäle (9) angeordnet ist und folgende Teile umfaßt:
- eine Ringdichtung (13), die den Sitz des Leitungshahns bildet und gegen den Schieber (4) andrückbar ist,
- verformbare Mittel (14-14'-28), die auf den hydrostatischen Flüssigkeitsdruck reagieren und die Dichtung (13) gegen den Schieber (4) drücken und die wenigstens einen Ring aus elastisch verformbarem Material umfassen,
- einen ringförmige Blindsitz (15), der mit dem korrespondierenden Durchgangskanal (9) in Verbindung steht und in dem die genannten verformbaren Mittel (14) aufgenommen sind,
dadurch gekennzeichnet,
- daß der ringförmige Blindsitz (15) von zwei koaxialen Ringen (16-17), nämlich einem inneren Ring (16-16') und einem äußeren Ring (17-17'), ferner von der ringförmigen Dichtung (13), die zwischen den beiden koaxialen Ringen (16-17) angeordnet ist, sowie einem Anschlußflansch (8) begrenzt ist,
- daß der innere Ring (16-16') wenigstens einen Kanal (19) aufweist, der eine Flüssigkeitsverbindung zwischen dem korrespondierenden Durchgangskanal (9) und dem ringförmigen Blindsitz (15) bildet,
- daß die Stirnseiten der koaxialen Ringe (16-17) auf der Seite des Schiebers (4) derart abgeschrägt sind, daß ein Spiel zwischen dem Schieber und dem inneren Ring (16-16') und gleitende Berührung zwischen dem Schieber und dem äußeren Ring (17-17') vorhanden ist,
- und daß die verformbaren Mittel (14-14'-28) aus elastomerem Material bestehen, während die ringförmige Dichtung (13-13') aus plastomerem Material besteht.

2. Vorrichtung nach Anspruch 1, dadurch gekennzeichnet, daß der äußere Ring (17-17') in der Nähe des ringförmigen Blindsitzes (15) eine abgefaste Fläche (17b) besitzt, die eine Stützschräge für die verformbaren Mittel (14-28) bildet, und daß der äußere Ring (17-17') in dem Körper (2) longitudinal verschiebbar ist.

3. Vorrichtung nach Anspruch 1 und 2, dadurch gekennzeichnet, daß der innere Ring (16') in dem Körper (2) longitudinal verschiebbar ist und Mittel (23) zur verschiebungsfesten Verbindung mit der Ringdichtung (13') umfaßt, während diese Ringdichtung (13') auf ihrem rückseitigen Teil eine geneigte Fläche (25) für den Kontakt mit den verformbaren Mitteln (14-28) aufweist.

4. Vorrichtung nach Anspruch 1 bis 3, dadurch gekennzeichnet, daß die verformbaren Mittel aus wenigstens zwei torusförmigen Dichtungen (28) bestehen, die auch bei fehlendem Druck untereinander, ferner mit der geneigten Fläche (25) der Ringdichtung (13') sowie mit den Seiten des ringförmigen Blindsitzes (15) in Dichtungskontakt stehen.

5. Vorrichtung nach Anspruch 1 und einem der Ansprüche 2 bis 4, dadurch gekennzeichnet, daß der äußere Ring (17-17') aus elastomerem Material besteht, während der innere Ring (16-16') aus Metall besteht.

6. Vorrichtung nach Anspruch 1 und 2, dadurch gekennzeichnet, daß die verformbaren Mittel (14) mit einem umlaufendem Wulst (14a) ausgestattet sind, der in einer Kehle (20) aufgenommen ist, die in dem äußeren Ring (17) angebracht ist und zwei in Richtung des Bodens des ringförmigen Blindsitzes (15) geneigte Sitenflächen besitzt, wobei die dem Boden zunächst liegende Seitenfläche (17b) einzige Stützfläche für die verformbaren Mittel (14) bildet.

## Claims

1. Device for ensuring the tightness between the body (2) and the ball (4) of a ball valve (4) comprising connecting flanges (8), the device (12) being arranged in the body (2) around each of the channels (9) for the passage of fluid and comprising:
- an annular gasket (13) which forms the seat of the valve able to be pressed against the ball (4);
- deformable means (14-14'-28) which react to the hydrostatic pressure of the fluid, which force the gasket (13) against the ball (4) and which comprise at least one ring of elastically deformable material;
- a blind annular housing (15), which communicates with the corresponding channel (19) in order to receive the said deformable means (14);
characterised in that the annular housing (15) is defined by two coaxial rings (15-17), respectively an inner ring (15-15') and an outer ring (17-17'), by the annular gasket (13) which is arranged between the two coaxial rings and by a connecting flange (8);
- the inner ring (15-15') comprises at least one channel (19) for the communication of fluid between the corresponding channel (9) and the annular housing (15);
- the ends of the coaxial rings (15-17) are bevelled adjacent the ball (4) so that there is a clearance
- between the ball and the inner ring (15-15') and allaing contact between the ball and the outer ring (17-17'):

- the deformable means (14-14'-28) are made from elastomeric material, whereas the annular gasket (13-13') is made from plastomeric material.

2. Device according to Claim 1, characterised in that the outer ring (17-17') comprises in the vicinity of the bottom of the blind annular housing (15), a sloping side (17b) forming a support chamfer for the deformable means (14-28) and is mounted in the body (2) with the possibility of longitudinal displacement.

3. Device according to Claims 1 and 2, characterised in that the inner ring (16') is mounted with the possibility of longitudinal displacement in the body (2) and comprises connecting means (23) so that it moves in translation with the annular gasket (13'), whereas this annular gasket (13') is provided on its rear part with an inclined face (25) for contact with the deformable means (14-28).

4. Device according to Claims 1 to 3, characterised in that the deformable means are constituted by at least two annular gaskets (25) in sealing contact, even in the absence of pressure, between them, with the sloping face (25) of the annular gasket (13') and with the faces of the annular housing (15).

5. Device according to Claim 1 and one of Claims 2 to 4, characterised in that the outer ring (17-17') is made from plastomeric material whereas the outer ring (16-16') is made of metal.

6. Device according to Claims 1 and 2, characterised in that the deformable means (14) are provided with a peripheral flange (14a) housed in a groove (20) which, provided in the outer ring (17), comprises two side faces inclined in the direction of the bottom of the annular housing (15), the side face (l7b) closest to the said base constituting, alone, a support face for the deformable means (14).

FIG.1

FIG.2

FIG.3

FIG.4

# FIG. 5

# FIG. 6